# EUROPÄISCHE PATENTSCHRIFT

(11) **EP 4 265 930 B1**
(45) Veröffentlichungstag und Bekanntmachung des Hinweises auf die Patenterteilung: **24.04.2024**
(21) Anmeldenummer: 23168660.1
(22) Anmeldetag: 19.04.2023
(51) Int. Cl.: F16C 27/06, F04D 25/06, F04D 25/08, F04D 29/10

(54) **KLIMASCHRANK MIT EINER WELLENDICHTUNG ZUM LUFTDICHTEN DREHBAREN FÜHREN EINER WELLE DURCH EINE WAND DES KLIMASCHRANKS**
AIR-CONDITIONING CABINET WITH A SHAFT SEAL FOR THE AIRTIGHT ROTATING GUIDING OF A SHAFT THROUGH A WALL OF THE CABINET
ARMOIRE DE CLIMATISATION COMPRENANT UN JOINT D'ARBRE POUR LE GUIDAGE EN ROTATION ÉTANCHE À L'AIR D'UN ARBRE À TRAVERS UNE PAROI DE L'ARMOIRE

(30) Priorität: 22.04.2022 DE 102022109718
(43) Veröffentlichungstag der Anmeldung: 25.10.2023
(73) Patentinhaber: Binder GmbH, 78532 Tuttlingen (DE)
(72) Erfinder: Ndubueze, Emeka, 78532 Tuttlingen (DE); Deking, Kjell, 78083 Dauchingen (DE)
(74) Vertreter: Westphal, Mussgnug & Partner Patentanwälte mbB

(56) Entgegenhaltungen:
- EP-A1- 2 878 827
- WO-A1-2008/125792
- WO-A1-2019/016107
- US-A- 3 372 960
- US-A1- 2016 195 101

## Beschreibung

Die Erfindung betrifft einen Klimaschrank mit einer Wellendichtung zum luftdichten drehbaren Führen einer Welle durch eine Wand.

Derartige Wellendichtungen finden bei Klimaschränken Verwendung, in deren Innenraum ein Lüfter betrieben werden soll, um die Luftumwälzung im Klimaschrank sicherzustellen und so für eine homogene Verteilung von Feuchtigkeit und Temperatur zu sorgen, während gleichzeitig einerseits aus Platzgründen, andererseits aber auch um den Eintrag von Motorabwärme in den Innenraum des Lüfters zu vermeiden, der Antrieb des Lüfters außerhalb des klimatisierten Innenraums des Klimaschranks angeordnet werden soll.

Dementsprechend muss bei einer solchen Anwendung eine Welle drehbar durch eine Öffnung in einer Wand, insbesondere die Kesselwand des Klimaschranks, geführt werden, da der Motor außerhalb und das vom Motor angetriebene Lüfterrad innerhalb des Kessels angeordnet ist. Diese Öffnung muss aber abgedichtet werden, um einen Luftaustausch zwischen Umgebung und Innenraum des Klimaschrank bestmöglich zu unterbinden, der sonst das Klima im Inneren des Klimaschranks kompromittieren würden. Eine in der Praxis weit verbreitete Ausführungsform einer Wellendichtung sind Wellendichtringe. Diese bestehen in der Regel aus einer ringförmigen Struktur, insbesondere aus Metall, die mit festem Sitz an der Wand, insbesondere am Rand der Öffnung, angebaut ist und die eine elastische, in den Ringinnenraum ragende Dichtlippe aufweisen. Die Dichtlippe kann dabei, beispielsweise mit einem Federelement, radial auf die Wellenoberfläche gedrückt werden, um die Dichtigkeit zu verbessern. Diese Konstruktion ist aber nicht in der Lage, Koaxialitätsund/oder Rundlaufabweichungen zu kompensieren. Zudem kommt es bereits nach kurzer Zeit zu Abnutzungserscheinungen und Verschleiß an der Dichtfläche und zu mit der Zeit immer stärker werdenden Undichtigkeiten an der Welle.

Um diese Probleme zu vermeiden oder zumindest zu reduzieren, wird in manchen Klimaschränken der Anmelderin eine andere Konstruktion einer Wellendichtung verwendet. Auch diese Konstruktion weist eine ringförmige Struktur, insbesondere aus Metall auf. Im Ringinnenraum ist eine Kunststoffscheiben mit einer zentralen Bohrung, in der die Welle läuft, leicht eingepresst, so dass eine Dichtwirkung realisiert wird, gleichzeitig aber eine gewisse Beweglichkeit der Scheibe innerhalb des Rings erhalten bleibt, wodurch Koaxialitäts- und/oder Rundlaufabweichungen ausgeglichen werden. Bei solchen Wellendichtungen wirken aber erhebliche Reibungskräfte und es kommt zu großem Materialverschleiß insbesondere der Kunststoffscheibe, so dass auch hier die Dichtung regelmäßig erneuert oder durch Einsatz einer neuen Kunststoffscheibe überarbeitet werden muss.

Durchführungen zum luftdichten, drehbaren Führen einer Welle durch die Öffnung einer Wand mit einem Wälzlager zur Aufnahme der Welle und einer einteiligen Dichtung aus einem elastischen Material sind beispielsweise aus der EP 2 878 827 A1 oder der WO 2019/016107 A1 bekannt. Weitere Durchführungen offenbaren die WO 2008/125792 A1, die US 3 372 960 A und die US 2016/ 195101 A1.

Die Aufgabe der Erfindung besteht daher darin, einen Klimaschrank mit einer Wellendichtung bereitzustellen, die lediglich geringen Verschleiß aufweist, eine gute Dichtwirkung hat und zudem Koaxialitäts- und/oder Rundlaufabweichungen kompensieren kann. Diese Aufgabe wird gelöst durch einen Klimaschrank mit den Merkmalen des Patentanspruchs 1. Vorteilhafte Weiterbildungen der Erfindung sind Gegenstand der abhängigen Ansprüche.

Der erfindungsgemäße Klimaschrank hat eine Wand, die eine Kesselwand bildet, und einen an der Wand angeordneten Lüfter. Der Lüfter weist einen außerhalb der die Kesselwand bildende Wand angeordneten Motor auf, der über eine durch eine Öffnung, die diese Wand aufweist, hindurch geführte Welle ein Lüfterrad antreibt. Dabei ist die Öffnung erfindungsgemäß mit einer Durchführung luftdicht abgedichtet, so dass die Welle luftdicht durch die Wand geführt wird.

Die Durchführung des erfindungsgemäßen Klimaschranks dient zum luftdichten, drehbaren Führen der Welle durch die Öffnung der Wand. Die Soll-Verlaufsrichtung der Welle gibt dabei die axiale Richtung vor, die radiale Richtung(en) werden durch die senkrecht auf der Achse stehenden Verbindungslinien zwischen der Welle und dem Rand der Öffnung vorgegeben.

Die Durchführung des erfindungsgemäßen Klimaschranks weist ein Wälzlager zur Aufnahme der Welle und eine einteiligen Dichtung aus einem elastischen Material auf.

Die einteilige Dichtung weist ihrerseits einen Wälzlageraufnahmeabschnitt, in den das Wälzlager, vorzugsweise ein Kugellager, aufgenommen ist, einen Wandaufnahmeabschnitt und einen flexiblen Verbindungsabschnitt, der den Wälzlageraufnahmeabschnitt und den Wandaufnahmeabschnitt lückenlos miteinander verbindet, auf.

In der Einsatzsituation der derart aufgebauten Dichtung sitzt das Wälzlager direkt auf der Welle und sein Innenteil kann luftdicht mit dieser verbunden sein. Wälzlager können bedingt durch ihre Konstruktion radiale Belastungen gut aufnehmen und stellen die Drehbarkeit der Welle sicher. Insbesondere kann der Verschleiß weiter reduziert werden, wenn das Wälzlager nicht mit Gewicht belastet wird, was insbesondere möglich ist, wenn durch die Lagerung der Komponenten, die durch die Welle miteinander verbunden werden, das Gewicht der Welle getragen wird.

Koaxialitäts- und Rundlaufabweichungen werden durch die einteilige Dichtung aufgenommen, was insbesondere dadurch ermöglicht wird, dass der flexible Verbindungsabschnitt eine Relativbewegung zwischen dem Wälzlageraufnahmeabschnitt und dem Wandaufnahmeabschnitt ermöglicht. Zugleich ist durch die lückenlose Verbindung zwischen Wälzlageraufnahmeabschnitt und Wandaufnahmeabschnitt auch sichergestellt, dass die Durchführung luftdicht ist.

Besonders vorteilhaft ist es, aus geometrischen Gründen, wenn der Wälzlageraufnahmeabschnitt ringförmig ist.

Gemäß einer Weiterbildung der Erfindung umfasst der Wälzlageraufnahmeabschnitt an seiner dem Wälzlager zugewandten Seite -also nach innen hin oder, mit anderen Worten gesagt in Richtung auf die Welle hin- den äußeren, also bei bestimmungsgemä-ßem Einsatz der Durchführung von der Welle weg und auf den Rand der Öffnung hin weisenden Rand des Wälzlagers U-förmig umfasst. Dies kann beispielsweise dadurch realisiert sein, dass zumindest dieser Abschnitt des Wälzlagers in eine umlaufende Ringnut aufgenommen ist.

Auf diese Weise kann man einerseits eine hohe Dichtigkeit gegen den Durchtritt von Luft durch die Verbindungsstelle zwischen Wälzlager und einteiliger Dichtung sicherstellen und das Lager zumindest teilweise vor direkter Luftströmung schützen.

Andererseits schafft man so eine Konfiguration, in der das Wälzlager gemäß einer vorteilhaften Weiterbildung der Erfindung fest mit der einteiligen Dichtung verklemmt ist. Dazu kann die Ringnut einen leichten Hinterschnitt aufweisen, so dass der Grund der Nut eine an die Länge des Wälzlagers in axialer Richtung angepasste Länge hat, ihre lichte Weite sich aber in den sich vom Grund weg weisenden Richtung verjüngt, so dass die Wände der Nut gegen das in sie eingesetzte Wälzlager vorgespannt sind.

Gemäß einer anderen vorteilhaften Weiterbildung der Erfindung ist der Wandaufnahmeabschnitt ringförmig und weist vorzugsweise an seiner vom Wälzlager abgewandten Seite eine Nut zum Einführen des Rands der Öffnung der Wand aufweist. Dies hat Vorteile bei der Schaffung einer luftdichten Verbindung zur Wand, da Befestigungsbohrungen oder -füße unnötig sind.

Auch diese Nut kann so gestaltet sein, dass nach denselben Prinzipien wie eben beschrieben eine Klemmwirkung zwischen Wandaufnahmeabschnitt und Wand erzeugt wird.

Wenn der Wandaufnahmeabschnitt zudem zumindest abschnittsweise konisch zuläuft, also der Außendurchmesser des Rings, der die Form des Wandaufnahmeabschnitts vorgibt, in axialer Richtung zum Innenraum des Kessels hin abnimmt, lässt sich die Durchführung besonders gut in die Öffnung einführen und erleichtert so die bei der erfindungsgemäßen Durchführung mögliche werkzeugfreie Montage der Durchführung von Hand.

Bevorzugt ist es weiterhin, wenn der flexible Verbindungsabschnitt, dessen Dicke in axialer Richtung bevorzugt nur einen Bruchteil der Dicke des Wälzlageraufnahmeabschnitts und des Wandaufnahmeabschnitts aufweist, im unbelasteten Zustand einen ersten Teilabschnitt aufweist, der in axialer Richtung relativ zu einem zweiten Teilabschnitt des Verbindungsabschnitts versetzt verläuft und einen dritten Teilabschnitt aufweist, der den ersten Teilabschnitt mit dem zweiten Teilabschnitt verbindet und den axialen Versatz überbrückt.

Dies führt insbesondere dazu, dass der Verbindungsabschnitt länger ist als der Abstand zwischen dem Wälzlageraufnahmeabschnitt und dem Wandaufnahmeabschnitt, wenn diese beiden Abschnitte konzentrisch zur Welle angeordnet sind, was einerseits den Ausgleich der Koaxialitäts- und Rundlaufsabweichungen erleichtert und andererseits dazu führt, dass die Welle vom Lager nicht abgestützt wird und keine Dämpfung der Wellenschwingung herbeiführt, was ebenfalls Verschleisserscheinungen entgegenwirkt.

Insbesondere können im unbelasteten Zustand des flexiblen Verbindungsabschnitts der erste Teilabschnitt und der zweite Teilabschnitt im Wesentlichen in radialer Richtung verlaufen und der dritte Teilabschnitt im Wesentlichen in axialer Richtung verlaufen.

Das bevorzugte elastische Material, aus dem die einteilige Dichtung gefertigt ist, ist Silikon.

Die Konstruktion der Durchführung des erfindungsgemäßen Klimaschranks erlaubt insbesondere, dass die Durchführung in vorteilhaften Ausführungsformen der Erfindung aus dem Wälzlager und der einteiligen Dichtung besteht, also keinerlei weitere Bauteile wie etwa Stützringe, Sicherungsringe, Stahlfedern, Flanschteile, Anschläge oder Befestigungsfüße benötigt werden.

Besonders vorteilhaft ist es ferner, wenn der Wandaufnahmeabschnitt in axialer Richtung so lang ausgeführt ist, dass er den Wälzlageraufnahmeabschnitt dann noch in axialer Richtung überragt, wenn der Wälzlagerabschnitt so weit es der Verbindungsabschnitt erlaubt in axialer Richtung verschoben ist und/oder dann noch entgegen der axialen Richtung überragt, wenn der Wälzlagerabschnitt so weit es der Verbindungsabschnitt erlaubt entgegen der axialen Richtung verschoben ist. Dadurch wird ein mechanischer Schutz insbesondere für den Verbindungsabschnitt, aber auch für den Wälzlagerabschnitt erreicht.

Die Erfindung wird nachfolgend anhand einer Figur, die ein Ausführungsbeispiel darstellt, näher erläutert. Es zeigt:

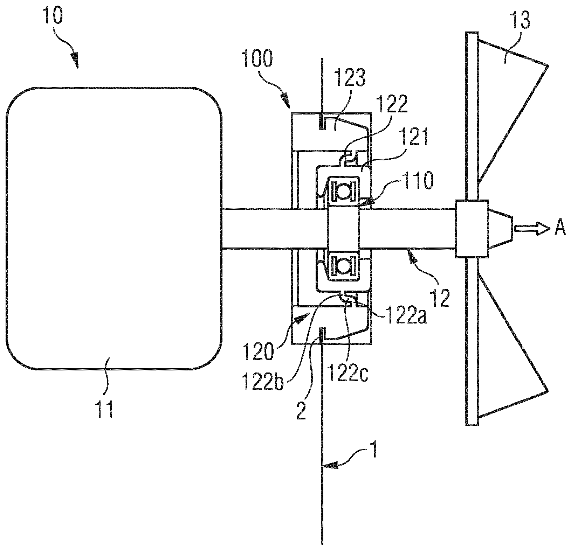

- Fig. 1:: eine als Lüfterwellendichtung eingesetzte Durchführung für eine Welle in einer Einbausituation in einem Klimaschrank im Querschnitt.

Figur 1 zeigt einen an einem Klimaschrank, von dem lediglich eine Wand 1, die Kesselwand, gezeigt ist, angeordneten Lüfter 10 mit einem außerhalb der Wand 1 angeordneten Motor 11, der über eine durch die Wand 1 hindurch geführte Welle 12 ein Lüfterrad 13 antreibt. Die Wand 1 weist dazu eine Öffnung auf, die mit einer Durchführung 100, die lediglich aus einem Wälzlager 110 und einer Dichtung 120 besteht, luftdicht abgedichtet ist, so dass die Welle 12 luftdicht durch die Wand 1 geführt wird.

Die Dichtung 120 weist einen ringförmigen Wälzlageraufnahmeabschnitt 121 auf, die den ihr zugewandten äußeren Rand des Wälzlagers 110 U-förmig umgreift und das Wälzlager 110 so festklemmt. Der ringförmige Wälzlageraufnahmeabschnitt 121 ist über einen flexiblen, deutlich dünneren Verbindungsabschnitt 122 mit einem ebenfalls ringförmigen Wandaufnahmeabschnitt 123 verbunden, der eine ringförmige Nut aufweist, in die der innere, der Welle 12 zugewandte Rand 2 der Öffnung eingreift, so dass er befestigt ist. Um das Einsetzen der Durchführung 100 in die Öffnung zu erleichtern, ist läuft die von der Welle 12 abgewandte Außenseite des Wandaufnahmeabschnitts 123 in axialer Richtung A konisch zu.

Der flexible Verbindungsabschnitt 122 weist im in der Figur 1 dargestellten unbelasteten Zustand einen ersten Teilabschnitt 122a auf, der in axialer Richtung A relativ zu einem zweiten Teilabschnitt 122b des Verbindungsabschnitts versetzt verläuft und einen dritten Teilabschnitt 122c auf, der den ersten Teilabschnitt 122a mit dem zweiten Teilabschnitt 122b verbindet und den axialen Versatz überbrückt. Dementsprechend ist die Länge des gesamten flexiblen Verbindungsabschnitts 122 größer als der Abstand zwischen dem Wälzlageraufnahmeabschnitt 121 und dem Wandaufnahmeabschnitt 123, was es ermöglicht, den Wälzlageraufnahmenabschnitt 121 relativ zum Wandaufnahmeabschnitt 123 zu bewegen und so Koaxialitäts- und Rundlaufabweichungen zu kompensieren. Dabei verlaufen im unbelasteten Zustand des flexiblen Verbindungsabschnitts 122 der erste Teilabschnitt 122a und der zweite Teilabschnitt 122b im Wesentlichen in radialer Richtung und der dritte Teilabschnitt 122c verläuft im Wesentlichen in axialer Richtung A.

Zudem ist der Wandaufnahmeabschnitt 123 in axialer Richtung A so lang ausgeführt, dass er den Wälzlageraufnahmeabschnitt 121 dann noch entgegen der axialen Richtung überragt, wenn der Wälzlagerabschnitt so weit es der Verbindungsabschnitt erlaubt entgegen der axialen Richtung verschoben ist und dadurch mechanisch geschützt.

Um die Welle 12 drehbar durch die Wand 1 zu führen, ist sie in das Wälzlager 110 aufgenommen und mit diesem verbunden.

### Bezugszeichenliste

- 1: Wand
- 2: Rand
- 10: Lüfter
- 11: Motor
- 12: Welle
- 13: Lüfterrad
- 100: Durchführung
- 110: Wälzlager
- 120: Dichtung
- 121: Wälzlageraufnahmeabschnitt
- 122: Verbindungsabschnitt
- 122a: erster Teilabschnitt
- 122b: zweiter Teilabschnitt
- 122c: dritter Teilabschnitt
- 123: Wandaufnahmeabschnitt
- A: axiale Richtung

## Patentansprüche

1. Klimaschrank mit einer Wand (1), die eine Kesselwand bildet, und mit einem an der Wand angeordneten Lüfter (10), wobei der Lüfter (10) einen außerhalb der Wand (1) angeordneten Motor (11) aufweist, der über eine durch die Wand (1) hindurch geführte Welle (12) ein Lüfterrad (13) antreibt, wobei die Wand (1) eine Öffnung aufweist, die mit einer Durchführung (100), luftdicht abgedichtet ist, so dass die Welle (12) luftdicht durch die Wand (1) geführt wird,
wobei die Durchführung (100) zum luftdichten, drehbaren Führen der Welle (12) durch die Öffnung der Wand (1) ein Wälzlager (110) zur Aufnahme der Welle (12) und eine einteiligen Dichtung (120) aus einem elastischen Material aufweist, wobei die einteilige Dichtung (120) einen Wälzlageraufnahmeabschnitt (121), mit dem das Wälzlager (110) verbunden ist, einen Wandaufnahmeabschnitt (123) und einen flexiblen Verbindungsabschnitt (122), der den Wälzlageraufnahmeabschnitt (121) und den Wandaufnahmeabschnitt (123) lückenlos miteinander verbindet, aufweist.

2. Klimaschrank nach Anspruch 1,
**dadurch gekennzeichnet, dass** der Wälzlageraufnahmeabschnitt (121) ringförmig ist.

3. Klimaschrank nach Anspruch 1 oder 2,
**dadurch gekennzeichnet, dass** der Wälzlageraufnahmeabschnitt (121) an seiner dem Wälzlager (110) zugewandten Seite den äußeren Rand des Wälzlagers (110) U-förmig umfasst.

4. Klimaschrank nach einem der Ansprüche 1 bis 3,
**dadurch gekennzeichnet, dass** der Wandaufnahmeabschnitt (123) ringförmig ist.

5. Klimaschrank nach einem der Ansprüche 1 bis 4,
**dadurch gekennzeichnet, dass** der Wandaufnahmeabschnitt (123) an seiner vom Wälzlager (110) abgewandten Seite eine Nut zum Einführen des Rands(2) der Öffnung der Wand (1) aufweist.

6. Klimaschrank nach einem der Ansprüche 1 bis 5,
**dadurch gekennzeichnet, dass** der Wandaufnahmeabschnitt (123) zumindest abschnittsweise konisch zuläuft.

7. Klimaschrank nach einem der Ansprüche 1 bis 6,
**dadurch gekennzeichnet, dass** das Wälzlager (110) mit dem Wälzlageraufnahmeabschnitt (121) fest verklemmt ist.

8. Klimaschrank nach einem der Ansprüche 1 bis 7,
**dadurch gekennzeichnet, dass** der flexible Verbindungsabschnitt (122) im unbelasteten Zustand einen ersten Teilabschnitt (122a) aufweist, der in axialer Richtung (A) relativ zu einem zweiten Teilabschnitt (122b) des Verbindungsabschnitts (122) versetzt verläuft und einen dritten Teilabschnitt (122c) aufweist, der den ersten Teilabschnitt (122a) mit dem zweiten Teilabschnitt (122b) verbindet und den axialen Versatz überbrückt.

9. Klimaschrank nach Anspruch 8,
**dadurch gekennzeichnet, dass** im unbelasteten Zustand des flexiblen Verbindungsabschnitts (122) der erste Teilabschnitt (122a) und der zweite Teilabschnitt (122b) im Wesentlichen in radialer Richtung verlaufen und dass der dritte Teilabschnitt (122c) im Wesentlichen in axialer Richtung (A) verläuft.

10. Klimaschrank nach einem der Ansprüche 1 bis 9,
**dadurch gekennzeichnet, dass** das elastische Material, aus dem die einteilige Dichtung (120) gefertigt ist, Silikon ist.

11. Klimaschrank nach einem der Ansprüche 1 bis 10,
**dadurch gekennzeichnet, dass** die Durchführung (100) aus dem Wälzlager (110) und der einteiligen Dichtung (120) besteht.

12. Klimaschrank nach einem der Ansprüche 1 bis 11,
**dadurch gekennzeichnet, dass** der Wandaufnahmeabschnitt (123) in axialer Richtung (A) so lang ausgeführt ist, dass er den Wälzlageraufnahmeabschnitt (121) dann noch in axialer Richtung (A) überragt, wenn der Wälzlagerabschnitt (121) soweit es der Verbindungsabschnitt (122) erlaubt in axialer Richtung (A) verschoben ist und/oder dann noch entgegen der axialen Richtung (A) überragt, wenn der Wälzlagerabschnitt (121) soweit es der Verbindungsabschnitt (122) erlaubt, entgegen der axialen Richtung (A) verschoben ist.

## Claims

1. Climate chamber, having a wall (1) which forms a tank wall, and having a cooling fan (10), wherein the cooling fan (10) comprises a motor (11), arranged outside of the wall (1), which drives a fan wheel (13) via a shaft (12) led through the wall (1), wherein the wall (1) comprises an opening which is sealed in an airtight manner with a conduit (100) such that the shaft (12) is led hermetically through the wall (1),
wherein the conduit (100) comprises, in order to hermetically and rotatably lead the shaft (12) through the opening in the wall (1), a roller bearing (110) for holding the shaft (12) and a one-piece seal (120) made of an elastic material, wherein the one-piece seal (120) comprises a roller bearing holding segment (121), to which the roller bearing (110) is connected, a wall holding segment (123) and a flexible connection segment (122), which seamlessly connects the roller bearing holding segment (121) and the wall holding segment (123) to each other.

2. Climate chamber in accordance with claim 1,
**characterized in that** the roller bearing holding segment (121) is ring-shaped.

3. Climate chamber in accordance with claim 1 or 2,
**characterized in that** the roller bearing holding segment (121), on its side facing the roller bearing (110), grasps the outer edge of the roller bearing (110) in a U-shape.

4. Climate chamber in accordance with any of claims 1 to 3,
**characterized in that** the wall holding segment (123) is ring-shaped.

5. Climate chamber in accordance with any of claims 1 to 4,
**characterized in that** the wall holding segment (123) comprises a slot its side facing away from the roller bearing (110) for inserting the edge (2) of the opening of the wall (1).

6. Climate chamber in accordance with any of claims 1 to 5,
**characterized in that** the wall holding segment (123) extends, at least partially, conically.

7. Climate chamber in accordance with any of claims 1 to 6,
**characterized in that** the roller bearing (110) is firmly clamped to the roller bearing holding segment (121).

8. Climate chamber in accordance with any of claims 1 to 7,
**characterized in that**, when in the unloaded state, the flexible connection segment (122) comprise a first sub-segment (122a), which extends offset in the axial direction (A) relative to a second sub-segment (122b) of the connection segment (122), and comprises a third sub-segment (122c), which connects the first sub-segment (122a) to the second sub-segment (122b) and bridges the axial offset.

9. Climate chamber in accordance with claim 8,
**characterized in that**, when the connection segment (122) is in the unloaded state, the first sub-segment (122a) and the second sub-segment (122b) extend essentially in the radial direction, and **in that** the third sub-segment (122c) extends essentially in the axial direction (A).

10. Climate chamber in accordance with any of claims 1 to 9,
**characterized in that** the elastic material from which the one-piece seal (120) is manufactured, is made of silicone.

11. Climate chamber in accordance with any of claims 1 to 10,
**characterized in that** the conduit (100) is comprised of the roller bearing (110) and the one-piece seal (120).

12. Climate chamber in accordance with any of claims 1 to 11,
**characterized in that** the wall holding segment (123) is implemented to extend in the axial direction (A) to a length at which it then extends, in the axial direction (A), beyond the roller bearing holding segment (121), when the roller bearing holding segment (121) is moved in the axial direction (A) as far as the connection segment (122) allows and/or then extends beyond and against the axial direction (A), when the roller bearing holding segment (121) is moved in the axial direction (A) as far as the connection segment (122) allows.

## Revendications

1. Armoire climatisée comportant une paroi (1) qui forme une paroi de cuve ainsi qu'un ventilateur (10) installé sur la paroi,
- le ventilateur (10) ayant un moteur (11) à l'extérieur de la paroi (1) et qui entraîne l'arbre (12) d'un rotor de ventilateur (13) traversant la paroi (1),
- la paroi (1) ayant une ouverture rendue étanche à l'air par un passage (100) pour guider l'arbre (12) de manière étanche à l'air à travers la paroi (1),
dans laquelle
le passage (100) comporte un palier à roulement (110) pour recevoir l'arbre (12) pour réaliser le guidage en rotation étanche à l'air de l'arbre (12) à travers l'ouverture de la paroi (1), recevant l'arbre (12) et un joint (120) en une seule pièce en une matière élastique,
- le joint (120) en une seule pièce comporte un segment de réception du palier de roulement (121) qui est relié au palier à roulement (110), un segment de réception de paroi (123) et un segment de liaison flexible (122) reliant sans laisser d'intervalle, le segment de réception de palier de roulement (121) et le segment de réception de paroi (123).

2. Armoire climatisée selon la revendication 1,
**caractérisée en ce que**
le segment de réception de palier de roulement (121) est de forme annulaire.

3. Armoire climatisée selon la revendication 1 ou 2,
**caractérisée en ce que**
le segment de réception de palier de roulement (121) reçoit sur son côté tourné vers le palier de roulement (110), par une forme en U, le bord extérieur du palier de roulement (110).

4. Armoire climatisée selon l'une des revendications 1 à 3,
**caractérisée en ce que**
le segment de réception de paroi (123) est de forme annulaire.

5. Armoire climatisée selon l'une des revendications 1 à 4,
**caractérisée en ce que**
le segment de réception de paroi (123) comporte sur son côté non tourné vers le palier de roulement (110), une rainure pour recevoir le bord (2) de l'ouverture de paroi (1).

6. Armoire climatisée selon l'une des revendications 1 à 5,
**caractérisée en ce que**
le segment de réception de paroi (123) est conique au moins par segment.

7. Armoire climatisée selon l'une des revendications 1 à 6,
**caractérisée en ce que**
le palier de roulement (110) est serré fermement contre le segment de réception de palier de roulement (121).

8. Armoire climatisée selon l'une des revendications 1 à 7,
**caractérisée en ce que**
le segment de liaison flexible (122) a une première partie de segment (122a) à l'état sollicité qui a un tracé décalé dans la direction axiale (A) par rapport à une seconde partie de segment (122b) du segment de liaison (122) ainsi qu'une troisième partie de segment (122c) qui relie la première partie de segment (122a) à la seconde partie de segment (122b) en chevauchant avec un décalage axial.

9. Armoire climatisée selon la revendication 8,
**caractérisée en ce que**
à l'état non sollicité du segment de liaison flexible (122), la première partie de segment (122a) et la seconde partie de segment (122b) sont pratiquement dans la direction radiale et la troisième partie de segment (122c) est pratiquement dans la direction axiale (A).

10. Armoire climatisée selon l'une des revendications 1 à 9,
**caractérisée en ce que**
la matière élastique dans laquelle le joint est réalisé en une seule pièce (120) est du silicone.

11. Armoire climatisée selon l'une des revendications 1 à 10,
**caractérisée en ce que**
le passage (100) se compose du palier de roulement (110) et du joint en une seule pièce (120).

12. Armoire climatisée selon l'une des revendications 1 à 11,
**caractérisée en ce que**
le segment de réception de paroi (123) a une longueur telle dans la direction axiale (A) que dans la direction axiale (A) il dépasse encore le segment de réception de palier de roulement (121) lorsque le segment de palier de roulement (121) est déplacé dans la direction axiale (A) dans la mesure où le segment de liaison (122) le permet, et/ou dépasse encore dans la direction axiale (A) lorsque le segment de palier de roulement (121) est déplacé dans la direction opposée à la direction axiale (A) dans la mesure où le segment de liaison (122) le permet.
